# EUROPÄISCHE PATENTANMELDUNG

(11) **EP 3 838 392 A1**
(43) Veröffentlichungstag der Anmeldung: **23.06.2021**
(21) Anmeldenummer: 19216838.3
(22) Anmeldetag: 17.12.2019
(51) Int. Cl.: B01J 2/04, B01J 19/26, C08J 3/12, C08G 18/10

(54) **VERFAHREN UND VORRICHTUNG ZUR HERSTELLUNG THERMOPLASTISCHER POLYMERE IN EINEM SPRÜHREAKTOR**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft eine Vorrichtung sowie ein Verfahren zur kontinuierlichen Herstellung partikulärer thermoplastischer Polymere (P) durch Umsetzung wenigstens zweier miteinander polymerisierbarer Monomere (A, B) in einem Sprühreaktor (1), wobei die wenigstens zwei miteinander polymerisierbareren Monomere (A, B) über eine dem Sprühreaktor (1) zugeordnete Mischeinrichtung (2) miteinander vermischt und diese Reaktionsmischung (RM) über eine Reaktionsmischungszuleitung (3, 3a, 3b) kontinuierlich in den Kopf (4a) des Sprühreaktors (1) eingetragen und dort mittels einer Sprüheinrichtung (5) in den Reaktionsraum (6) versprüht wird und in Richtung des Bodenbereichs (7) des Sprühreaktors (1) strömt, wo das partikuläre thermoplastische Polymer (P) über eine Produktaustragsleitung (8) abgeführt wird, wobei über eine im Kopfbereich (4) des Sprühreaktors (1) vorgesehene Trägergaszuführung (9) ein über einen der Trägergaszuführung (9) zugeordneten Wärmetauscher (10) temperiertes Trägergas (G) in den Sprühreaktor (1) eingetragen und oberhalb des Bodenbereichs (7) des Sprühreaktors (1) über eine Trägergasabführung (11) ausgetragen wird, wobei das Verfahren dadurch gekennzeichnet ist, dass die wenigstens zwei miteinander polymerisierbareren Monomere (A, B) in einer sich vom Kopfbereich (4) des Sprühreaktors (1) bis zu einer oberhalb des Bodenbereichs (7) angeordneten Kühlfluideintragungseinrichtung (14) erstreckenden Reaktionszone (12) zu dem thermoplastischem Polymer umgesetzt und oberhalb dessen Schmelzpunkt gehalten und anschließend in einer sich von der Kühlfluideintragungseinrichtung (14) bis zum Bodenbereich (7) des Sprühreaktors (1) erstreckenden Kühlzone (13) unterhalb dessen Erstarrungstemperatur abgekühlt wird, wodurch das partikuläre thermoplastische Polymer (P) erhalten wird. Die Erfindung betrifft ferner ein partikuläres thermoplastisches Polymer, das nach dem erfindungsgemäßen Verfahren hergestellt oder herstellbar ist.

## Beschreibung

Die Erfindung betrifft eine Vorrichtung sowie ein Verfahren zur kontinuierlichen Herstellung partikulärer thermoplastischer Polymere durch Umsetzung wenigstens zweier miteinander polymerisierbarer Monomere in einem Sprühreaktor, wobei die wenigstens zwei miteinander polymerisierbareren Monomere über eine dem Sprühreaktor zugeordnete Mischeinrichtung miteinander vermischt und diese Reaktionsmischung über eine Reaktionsmischungszuleitung kontinuierlich in den Kopf des Sprühreaktors eingetragen und dort mittels einer Sprüheinrichtung in den Reaktionsraum versprüht wird und in Richtung des Bodenbereichs des Sprühreaktors strömt, wo das partikuläre thermoplastische Polymer über eine Produktaustragsleitung abgeführt wird, wobei über eine im Kopfbereich des Sprühreaktors vorgesehene Trägergaszuführung ein über einen der Trägergaszuführung zugeordneten Wärmetauscher temperiertes Trägergas in den Sprühreaktor eingetragen und oberhalb des Bodenbereichs des Sprühreaktors über eine Trägergasabführung ausgetragen wird. Die Erfindung betrifft ferner ein partikuläres thermoplastisches Polymer, das nach dem erfindungsgemäßen Verfahren hergestellt oder herstellbar ist.

Die Herstellung von festen Kondensationsprodukten in Pulverform aus flüssigen oder gelösten Ausgangsstoffen wird in der Regel in Mehrstufenprozessen durchgeführt. Die chemische Reaktion erfolgt überwiegend in Lösungsmittel oder in wässriger Dispersion in Rührkesseln. Das Reaktionsprodukt liegt danach in gelöster oder dispergierter Form vor und muss durch energieaufwendige Trocknungs- und Zerkleinerungsprozesse· in die gewünschte Form gebracht und das Lösungsmittel aufbereitet werden. Der Trocknungsprozess kann beispielsweise in einem Sprühturm vorgenommen werden. Eine Sprühtrocknung von Melamin-Formaldehyd-Kondensaten ist u.a. in DE 2502168 B1, DD 259 409 und GB 2 178 749 beschrieben.

Aus DE 22 33 428 A1 ist ein Verfahren zur Einkapselung von in einer reaktiven Flüssigkeit fein verteilten Substanzen nach einem Sprühkondensationsverfahren bekannt. Während der Sprühkondensation polymerisiert das reaktive System unter Bildung von Kapselwänden und es werden trockene Polymerkapseln erhalten. Als reaktives System werden Vorkondensate aus Harnstoff- oder Melamin-Formaldehyd-Verbindungen genannt.

Ein Herstellungsverfahren der eingangs genannten Art ist beispielsweise aus WO 2004/085050 A2 bekannt. Hierbei werden die Reaktanden gemeinsam oder getrennt in einen Sprühturm eingetragen und dort miteinander zur Reaktion gebracht, sodass ein festes pulverförmiges Produkt anfällt, welches dann in eine Wirbelschicht am Boden des Sprühturmes eingetragen und dort zu Ende reagieren und gekühlt/verfestigt werden kann, wobei entstehender Feinstaub mit dem Gasstrom ausgetragen und mittels Filtration abgetrennt werden kann. In die Wirbelschicht können weitere flüssige und/oder feste Additive (Flammschutzmittel, Farbpigmente) zugegeben werden. Im Falle von feuchten (Zwischen-)Produkten kann in einem nachgeschalteten Reaktor eine Trocknung oder nachgelagerte Reaktion zum Endprodukt erfolgen. Bei diesem Verfahren kann es als nachteilig empfunden werden, dass es zu Aggregationserscheinungen durch Zusammenballen der Partikel kommen kann, beispielsweise wenn diese noch nicht vollständig abreagiert sind oder aufgrund der hohen Temperaturen an der Oberfläche klebrig sind. Dem müsste beispielsweise durch größere Fallhöhen oder längere Verweilzeiten entgegengewirkt werden, was mit einem größeren Herstellungsaufwand einhergeht. Zudem muss entlang des Fallweges die Reaktionswärme an das Inertgas abgegeben werden, mit dem auch die Kühlung und Vorverfestigung des Produktes vor dem Austrag durchgeführt werden muss. In den Anwendungsbeispielen werden Isocyanate mit hochmolekularen Diolen (Mw 500-10000) eingesetzt, bei denen die spezifischen Reaktionswärmen gering sind.

Die Aufgabe der vorliegenden Erfindung bestand somit darin, ein Verfahren zur kontinuierlichen Herstellung partikulärer thermoplastischer Polymere durch Umsetzung wenigstens zweier miteinander polymerisierbarer Monomere in einem Sprühreaktor dahingehend zu verbessern, dass eine Verringerung von Aggregationserscheinungen erreicht wird und zudem auch pulverförmige polymere Produkte erzeugt werden können, die einen Schmelzpunkt von beispielsweise 50 bis 200 °C aufweisen. Insbesondere soll sich das Verfahren für die Herstellung OH-funktioneller Polyurethan-Präpolymere eignen, vorzugsweise für solche basierend auf niedermolekularen Polyolen enthaltend oder bestehend aus einem oder mehreren aliphatischen, cycloaliphatischen und / oder araliphatischen Diolen mit einem oder mehreren aliphatischen, cycloaliphatischen und / oder araliphatischen Diisocyanaten, wobei die Isocyanat-Komponente und die Diol-Komponente insbesondere so ausgewählt werden, dass wenn sie in einem molaren Verhältnis von 1,0 : 1,0 umsetzt werden die Gesamtreaktionsenthalpie über alle Verfahrensstufen von -900 kJ/kg bis -500 kJ/kg beträgt, bestimmt gemäß DIN 51007:1994-06.

Die Aufgabe wird gelöst durch ein Verfahren zur kontinuierlichen Herstellung partikulärer thermoplastischer Polymere durch Umsetzung wenigstens zweier miteinander polymerisierbarer Monomere in einem Sprühreaktor, wobei die wenigstens zwei miteinander polymerisierbareren Monomere über eine dem Sprühreaktor zugeordnete Mischeinrichtung miteinander vermischt und diese Reaktionsmischung über eine Reaktionsmischungszuleitung kontinuierlich in den Kopf des Sprühreaktors eingetragen und dort mittels einer Sprüheinrichtung in den Reaktionsraum versprüht wird und in Richtung des Bodenbereichs des Sprühreaktors strömt, wo das partikuläre thermoplastische Polymer über eine Produktaustragsleitung abgeführt wird, wobei über eine im Kopfbereich des Sprühreaktors vorgesehene Trägergaszuführung ein über einen der Trägergaszuführung zugeordneten Wärmetauscher temperiertes Trägergas in den Sprühreaktor eingetragen und oberhalb des Bodenbereichs des Sprühreaktors über eine Trägergasabführung ausgetragen wird, wobei das Verfahren dadurch gekennzeichnet ist, dass die wenigstens zwei miteinander polymerisierbareren Monomere in einer sich vom Kopfbereich des Sprühreaktors bis zu einer oberhalb des Bodenbereichs angeordneten Kühlfluideintragungseinrichtung erstreckenden Reaktionszone zu dem thermoplastischem Polymer umgesetzt und oberhalb dessen Schmelzpunkt gehalten und anschließend in einer sich von der Kühlfluideintragungseinrichtung bis zum Bodenbereich des Sprühreaktors erstreckenden Kühlzone unterhalb dessen Erstarrungstemperatur abgekühlt wird, wodurch das partikuläre thermoplastische Polymer erhalten wird.

Der Erfindung liegt die Erkenntnis zugrunde, dass durch Einsatz einer mit einem Kühlfluid gekühlten Kühlzone im Bodenbereich des Reaktors ein Zusammenkleben der einzelnen Polymerpartikel weitestgehend vermieden werden kann. Die Reaktion wird dabei typischerweise so durchgeführt, dass die Partikel bis zur weitestgehend vollständigen Umsetzung der Reaktionspartner flüssig sind und dann bei Erreichen der Kühlzone unmittelbar verfestigt werden, sodass die Partikeloberflächen nicht mehr klebrig sind. Das partikuläre polymere Produkt kann dann vom Kühlfluid abgetrennt werden. Wenn das Kühlfluid ein Gas ist, kann das Produkt direkt weiterverarbeitet oder abgepackt werden. Wird als Kühlfluid eine Flüssigkeit, beispielsweise Wasser, eingesetzt, kann das Produkt - falls Wasser bei der Weiterverarbeitung stört, zuvor noch einem Trocknungsschritt unterworfen werden.

Vorzugsweise ist bei dem erfindungsgemäßen Verfahren das thermoplastische Polymer ein hydroxy-terminierte Polymer wobei das erste Monomer A zumindest ein Polyisocyanat und das zweite Monomer B zumindest ein cycloaliphatisches, aliphatisches oder araliphatisches Polyol oder eine Mischung von diesen mit einer Hydroxylzahl von ≥ 1000 mg KOH/g bestimmt gemäß DIN EN ISO 4629-2:2016 umfasst und das erste Monomer A und/ oder das zweite Monomer B optional zumindest einen Katalysator und / oder Zusatzstoff enthält, wobei die Komponenten A und B in einem molaren Verhältnis von 0,9 : 1,0 bis 0,999 :1,000 eingesetzt werden. Die Herstellung solcher thermoplastischer Polymere mit dem erfindungsgemäßen Verfahren ist besonders vorteilhaft, weil die Polymere dann für eine spätere Weiterverarbeitung zu Polyurethanen deutlich weniger herstellungsbedingte Verunreinigungen enthalten als auf herkömmlichem Wege hergestellte hydroxy-terminierte Polymer. Diese Polymere weisen zudem in der Regel niedrige Schmelzpunkte auf wobei hier der erfindungsgemäße Einsatz einer Kühlzone ein Zusammenkleben der in der Reaktionszone noch flüssigen Polymerpartikel verhindert. Dies gilt in ganz besonderem Maße für die Umsetzung von 1,4-Butandiol mit Hexamethylen-Diisocyanat (Desmodur® H). Hier muss im Herstellungsprozess ein sehr enges Temperaturfenster eingehalten werden, das oberhalb des Schmelzpunktes des erhaltenen Produkts von 190 °C und unterhalb der Zersetzungstemperatur von ca. 235 °C liegt.

Das cycloaliphatische, aliphatische oder araliphatische Polyol ist insbesondere ein Diol. Das cycloaliphatische, aliphatische oder araliphatische Polyol weist insbesondere Molekulargewicht von 62 g/mol bis 210 g/mol auf. Vorzugsweise ist das cycloaliphatische, aliphatische oder araliphatische Polyol ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,3-Cyclobutandiol, 1,3-Cyclopentandiol, 1,2-, 1,3- und 1,4-Cyclohexandiol, 1,4-Cyclohexandimethanol, und / oder Mischungen von diesen. Die Polyole und / oder dessen Vorläuferverbindungen können aus fossilen oder biologischen Quellen gewonnen worden sein.

Das erfindungsgemäße Verfahren wird vorzugsweise lösemittelfrei durchgeführt.

Das hydroxy-terminierte Polymer kann insbesondere eine OH-Funktionalität im Bereich von 1,8 bis 2,2 aufweisen, vorzugsweise von 1,9 bis 2,1, besonders bevorzugt von 1,95 bis 2,05. Das Polyisocyanat der Komponente A kann zumindest ein cycloaliphatisches, aliphatisches, aromatisches und/oder ein araliphatisches Diisocyanat umfassen oder daraus bestehen, insbesondere zumindest ein cycloaliphatisches, aliphatisches und/oder araliphatisches Diisocyanat, bevorzugt zumindest ein aliphatisches oder cycloaliphatisches Diisocyanat, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen von diesen. Sofern Wasser als Kühlfluid zum Einsatz kommt kann hierdurch sogar nicht abreagiertes Isocyanat durch die Reaktion mit Wasser inaktiviert beziehungsweise entfernt werden. Die Polyisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin hergestellt, welches aus biologischen Quellen gewonnen wird.

Ganz besonders bevorzugt ist das Monomer A Hexamethylen-Diisocyanat (Desmodur® H) und das Monomer B 1,4-Butandiol, wobei die Temperatur in der Reaktionszone auf einen Bereich von oberhalb 190 °C und unterhalb 235 °C, insbesondere unterhalb von 233 °C eingestellt wird.

Das Trägergas kann bei dem erfindungsgemäßen Verfahren im Gleichstrom oder Gegenstrom mit der eingesprühten Reaktionsmischung in den Sprühreaktor eingetragen werden. Die Mischeinrichtung kann beispielsweise als Statikmischer oder als dynamischer Mischer ausgebildet sein.

Als Sprüheinrichtung können bei dem erfindungsgemäßen Verfahren sämtliche dem Fachmann bekannten Einrichtungen verwendet werden, wie beispielsweise Düsen , Rotationszerstäuber oder Prillplatten. Die Mischeinrichtung und/ oder die Sprüheinrichtung können temperiert werden. Bevorzugt wird die Reaktionsmischung mittels der Sprüheinrichtung zu Tropfen versprüht, die einen mittleren Durchmesser d50 von 0,01 bis 3 mm aufweisen, insbesondere von 0,01 bis 0,3 mm

Bei dem erfindungsgemäßen Verfahren kann durch Fließrate des Trägergases und/ oder der Reaktionsmischung und/ oder der Eintritts-temperatur des Trägergases und/ oder der Reaktionsmischung die Temperatur in der Reaktionszone des Sprühreaktors derart eingestellt werden, dass ein vollständiger Reaktionsumsatz erreicht und unerwünschte Nebenreaktionen oder Zersetzungen nicht auftreten. Dabei können in Langzeituntersuchungen ermittelte Zersetzungstemperaturen auch lokal bzw. kurzzeitig überschritten werden. Der Verlauf der Tropfentemperaturen kann beispielsweise über eine Simulation aus den eingestellten Fahrparametern abgeschätzt oder auch mittels einer Wärmebildkamera gemessen werden, was aber wegen des hohen apparativen Aufwandes weniger bevorzugt ist. Die Abschätzung kann beispielsweise über die Ermittlung des Anteils an Zersetzungsprodukten bestimmt werden. Wenn dieser einen gewünschten Schwellenwert übersteigt kann durch entsprechende Maßnahmen gegengesteuert werden. Eine Produkttemperaturerhöhung kann durch Anheben der Eintrittstemperaturen von Gas und/oder Sprühtropfen und auch durch Erniedrigen des Verhältnisses aus Gas- und Tropfenmassenstromes erreicht werden. Eine Vermeidung von überhöhten Temperaturen gelingt beispielsweise durch Absenken der Tropfengrößen, z.B. durch Erhöhen des Düsendruckes und Wahl entsprechender Druckdüseneinbauten, wodurch Durchsatz und Tropfengröße gleichzeitig modifiziert werden.

Nach einer Weiterbildung des erfindungsgemäßen Verfahrens wird durch die Fließrate des Trägergases und/ oder der Reaktionsmischung und/ oder die Eintrittstemperatur des Trägergases und/ oder der Reaktionsmischung die Temperatur in der Reaktionszone des Sprühreaktors derart eingestellt, dass die Tröpfchen der versprühten Reaktionsmischung nach Durchschreiten der Reaktionszone und bis zum Erreichen der Kühlzone einen Reaktionsumsatz von wenigstens 95%, insbesondere wenigstens 98% aufweisen, wobei der Reaktionsumsatz insbesondere über die Bestimmung des Verhältnisses der Urethangruppen zu unreagierten OH-Gruppen am Austritt der Reaktionszone ermittelt wird, vorzugsweise mittels ¹H-NMR-Messung nach DIN EN ISO/IEC 17025. Da der Umsatz dabei über die relativ stabilen OH- und Urethangruppen bestimmt wird, kann bei der Probennahme eine schnelle Abkühlung in einem Wasserbad vorgenommen werden, um den Reaktionsumsatz zu stoppen. Dabei werden die unreagierten Isocyanatgruppen zerstört, die in die Ermittlung nicht eingehen. Das Verhältnis von OH- zu Urethangruppen für den vollständigen Umsatz ist hierbei durch das initiale Mischungsverhältnis festgelegt.

Die Verweilzeit der Reaktionsmischung in der Reaktionsmischungszuleitung und/ oder die Temperatur der Reaktionsmischung in der Reaktionsmischungszuleitung kann derart eingestellt werden, dass die Reaktionsmischung am Eingang der Sprüheinrichtung einen Reaktionsumsatz von bis zu 80% aufweist, vorzugsweise von 10 bis 50 %. Hierdurch kann ein Teil der Polymerisationsreaktion auf den Anlagenabschnitt vor dem Einsprühen verlagert werden sodass eine zwar noch sprühfähige Mischung vorliegt, jedoch nicht mehr die gesamte chemische Reaktion innerhalb der Verweilzeit im Sprühturm vonstatten gehen muss.

Die Reaktionsmischungszuleitung kann mit einer Heizeinrichtung ausgestattet sein und die Temperatur der Reaktionsmischung auf beispielsweise 100 - 250°C eingestellt werden, vorzugsweise auf 150-200°C. Vorzugsweise wird die Verweilzeit der Reaktionsmischung in der Reaktionsmischungszuleitung und/ oder die Temperatur der Reaktionsmischung in der Reaktionsmischungszuleitung so gewählt, dass die dynamische Viskosität der Reaktionsmischung am Eingang der Sprüheinrichtung 1 bis 1000 mPas aufweist, insbesondere 1 bis 300 mPas. Durch diese Begrenzung der Viskosität kann eine bestimmungsgemäße Zertropfung in der Sprüheinrichtung sichergestellt werden. Diese Viskositäten können vorab im Labor ermittelt werden, in dem entsprechende teil-umgesetzte Oligomere durch geeignete Mischungen der Monomere erzeugt und deren Viskositäten vermessen werden, z.B. in einem temperierten ARES-Rheometer.

Bei dem erfindungsgemäßen Verfahren kann die mittlere Verweilzeit der Tröpfchen im Sprühreaktor vom Verlassen der Sprüheinrichtung bis zum Erstarren der Tröpfchen zu Partikeln derart eingestellt werden, dass sie 10 bis 300 s beträgt, vorzugsweise 10 bis 120 s. Diese Zeiten können durch Wahl der Gasführung, also Gleichstrom oder Gegenstrom, die Turmhöhe unter Beachtung der Luftgeschwindigkeiten und der Tropfengröße realisiert werden.

Bei dem erfindungsgemäßen Verfahren kann als Trägergas im Prinzip jedes geeignete Gas verwendet werden, wie beispielsweise Stickstoff oder aber auch Luft. Vorzugsweise weist das Trägergas eine Temperatur von 150 bis 300°C.

Bevorzugt wird das erfindungsgemäße Verfahren in der Weise durchgeführt, dass die Monomere des thermoplastischen Polymers bei Erreichen der Produktaustragsleitung nahezu quantitativ umgesetzt sind, vorzugsweise zu wenigstens 95 Gew.-%. Dies kann durch die bereits vorstehend beschriebenen Methoden wie Verweilzeit, Reaktionstemperatur usw. erreicht werden.

Zur Vermeidung von Ablagerungen an der Innenwand des Sprühreaktors kann bei dem erfindungsgemäßen Verfahren eine Abreinigungseinrichtung eingesetzt werden, insbesondere eine Abreinigungseinrichtung mit Flüssigkeitsfilm, beispielsweise eine solche, wie sie unter der Bezeichnung "CIP-Reinigungssystem" bekannt ist.

Bei dem erfindungsgemäßen Verfahren kann ferner über die Kühlfluideintragungseinrichtung ein Kühlgasstrom eingetragen werden, insbesondere im Gleichstrom mit der Fallrichtung der Tröpfchen der Reaktionsmischung.

Es kann erfindungsgemäß weiter vorgesehen sein, dass über die Kühlfluideintragungseinrichtung eine Quenchflüssigkeit eingesprüht wird, insbesondere im Gleichstrom mit der Fallrichtung der Tröpfchen der Reaktionsmischung, wobei die Quenchflüssigkeit vorzugsweise Wasser ist.

In vorteilhafter Ausgestaltung des erfindungsgemäßen Verfahrens wird über die Kühlfluideintragungseinrichtung Wasser in den Bodenbereich des Sprühreaktors eingebracht, welches als insbesondere gerührtes Wasserbad zum Auffangen und zum Erstarren der Tropfen des thermoplastischen Polymers dient.

Bei dem erfindungsgemäßen Verfahren kann das partikuläre thermoplastische Polymer mittels einer im Bodenbereich des Sprühreaktors oder in der Produktaustragsleitung angeordneten Abtrenneinrichtung vom Kühlfluid abgetrennt werden. Dabei kann das partikuläre thermoplastische Polymer nach Durchlaufen der Abtrenneinrichtung zusätzlich thermisch getrocknet werden. Ferner kann das abgetrennte partikuläre thermoplastische Polymer zur Homogenisierung des Polymerisationsgrades in einer Temperiereinrichtung nachgetempert werden. Das in der Abtrenneinrichtung abgetrennte Kühlfluid kann zudem über eine von der Abtrenneinrichtung abgehende Kühlfluid-Rückführungsleitung der Kühlfluideintragungseinrichtung wieder zugeführt werden, wobei das abgetrennte Kühlfluid vorzugsweise mittels eines in der Kühlfluideintragungseinrichtung vorgesehenen Wärmetauschers auf die gewünschte Temperatur abgekühlt wird.

Das über die Trägergasabführung aus dem Sprühreaktor ausgetragene Trägergas kann mittels einer Fördereinrichtung zum der Trägergaszuführung zugeordneten Wärmetauscher zurückgeführt und von dort dem Prozess über die Trägergaszuführung wieder zugeführt werden, wobei das Trägergas während der Rückführung vorzugsweise gereinigt und/ oder getrocknet wird. Dazu kommen beispielsweise Wäscher oder Zyklone oder Filter, Gaskühler oder Kondensatoren und Wärmetauscher zum Einsatz.

Ein weiterer Gegenstand der vorliegenden Erfindung betrifft ein partikuläres thermoplastisches Polymer, hergestellt oder herstellbar nach dem erfindungsgemäßen Verfahren.

Die Erfindung betrifft des weiteren einen Sprühreaktor zur kontinuierlichen Herstellung partikulärer thermoplastischer Polymere durch Umsetzung wenigstens zweier miteinander polymerisierbarer Monomere, wobei dem Sprühreaktor eine Mischeinrichtung zugeordnet ist, über welche die wenigstens zwei miteinander polymerisierbaren Monomere miteinander vermischt und diese Reaktionsmischung über eine Reaktionsmischungszuleitung in den Kopf des Sprühreaktors eingetragen und dort mittels einer Sprüheinrichtung in den Reaktionsraum eingesprüht werden kann und in Richtung des Bodenbereichs des Sprühreaktors strömen kann, wo eine Produktaustragsleitung zum Austragen des partikulären thermoplastischen Polymers angeordnet ist, wobei der Sprühreaktor über eine im Kopfbereich vorgesehene Trägergaszuführung verfügt, mittels der ein über einen der Trägergaszuführung zugeordneten Wärmetauscher temperierbares Trägergas mit der eingesprühten Reaktionsmischung im Sprühreaktor eingetragen und oberhalb des Bodenbereichs des Sprühreaktors über eine Trägergasabführung ausgetragen werden kann, wobei der Sprühreaktor dadurch gekennzeichnet ist, dass der Sprühreaktor in eine Reaktionszone und eine Kühlzone unterteilt ist, von denen sich die Reaktionszone vom Kopfbereich des Sprühreaktors bis zu einer Kühlfluideintragungseinrichtung erstreckt, die oberhalb des Bodenbereichs im Sprühreaktor angeordnet und geeignet ist, das thermoplastische Polymer unterhalb seiner Erstarrungstemperatur abzukühlen.

Die Erfindung betrifft insbesondere die folgenden Ausführungsformen:
Nach einer ersten Ausführungsform betrifft die Erfindung ein Verfahren zur kontinuierlichen Herstellung partikulärer thermoplastischer Polymere durch Umsetzung wenigstens zweier miteinander polymerisierbarer Monomere in einem Sprühreaktor, wobei die wenigstens zwei miteinander polymerisierbareren Monomere über eine dem Sprühreaktor zugeordnete Mischeinrichtung miteinander vermischt und diese Reaktionsmischung über eine Reaktionsmischungszuleitung kontinuierlich in den Kopf des Sprühreaktors eingetragen und dort mittels einer Sprüheinrichtung in den Reaktionsraum versprüht wird und in Richtung des Bodenbereichs des Sprühreaktors strömt, wo das partikuläre thermoplastische Polymer über eine Produktaustragsleitung abgeführt wird, wobei über eine im Kopfbereich des Sprühreaktors vorgesehene Trägergaszuführung ein über einen der Trägergaszuführung zugeordneten Wärmetauscher temperiertes Trägergas in den Sprühreaktor eingetragen und oberhalb des Bodenbereichs des Sprühreaktors über eine Trägergasabführung ausgetragen wird, wobei das Verfahren dadurch gekennzeichnet ist, dass die wenigstens zwei miteinander polymerisierbareren Monomere in einer sich vom Kopfbereich des Sprühreaktors bis zu einer oberhalb des Bodenbereichs angeordneten Kühlfluideintragungseinrichtung erstreckenden Reaktionszone zu dem thermoplastischem Polymer umgesetzt und oberhalb dessen Schmelzpunkt gehalten und anschließend in einer sich von der Kühlfluideintragungseinrichtung bis zum Bodenbereich des Sprühreaktors erstreckenden Kühlzone unterhalb dessen Erstarrungstemperatur abgekühlt wird, wodurch das partikuläre thermoplastische Polymer erhalten wird.

Nach einer zweiten Ausführungsform betrifft die Erfindung ein Verfahren nach Ausführungsform 1, dadurch gekennzeichnet, dass das thermoplastische Polymer ein hydroxy-terminierte Polymer ist und das erste Monomer A zumindest ein Polyisocyanat und das zweite Monomer B zumindest ein cycloaliphatisches, aliphatisches oder araliphatisches Polyol oder eine Mischung von diesen mit einer Hydroxylzahl von ≥ 1000 mg KOH/g bestimmt gemäß DIN EN ISO 4629-2:2016 umfasst und das erste Monomer A und/ oder das zweite Monomer B optional zumindest einen Katalysator und / oder Zusatzstoff enthält, wobei die Komponenten A und B in einem molaren Verhältnis von 0,9 : 1,0 bis 0,999 :1,000 eingesetzt werden.

Nach einer dritten Ausführungsform betrifft die Erfindung ein Verfahren nach Ausführungsform 2, dadurch gekennzeichnet, dass das hydroxy-terminierte Polymer eine OH-Funktionalität im Bereich von 1,8 bis 2,2, vorzugsweise von 1,9 bis 2,1, besonders bevorzugt von 1,95 bis 2,05 aufweist.

Nach einer vierten Ausführungsform betrifft die Erfindung ein Verfahren nach Ausführungsform 2 oder 3, dadurch gekennzeichnet, dass das Polyisocyanat der Komponente A zumindest ein cycloaliphatisches, aliphatisches, aromatisches und/oder ein araliphatisches Diisocyanat umfasst oder daraus besteht, insbesondere zumindest ein cycloaliphatisches, aliphatisches und/oder araliphatisches Diisocyanat, bevorzugt zumindest ein aliphatisches oder cycloaliphatisches Diisocyanat, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen von diesen. Die Polyisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin hergestellt, welches aus biologischen Quellen gewonnen wird.

Nach einer fünften Ausführungsform betrifft die Erfindung ein Verfahren nach einer der vorstehenden Ausführungsformen, dadurch gekennzeichnet, dass das Trägergas im Gleichstrom oder Gegenstrom mit der eingesprühten Reaktionsmischung in den Sprühreaktor eingetragen wird.

Nach einer sechsten Ausführungsform betrifft die Erfindung ein Verfahren nach einer der vorstehenden Ausführungsformen, dadurch gekennzeichnet, dass die Mischeinrichtung ein Statikmischer oder ein dynamischer Mischer ist.

Nach einer siebten Ausführungsform betrifft die Erfindung ein Verfahren nach einer der vorstehenden Ausführungsformen, dadurch gekennzeichnet, dass die Sprüheinrichtung Düsen, Rotationszerstäuber oder Prillplatten umfasst.

Nach einer achten Ausführungsform betrifft die Erfindung ein Verfahren nach einer der vorstehenden Ausführungsformen, dadurch gekennzeichnet, dass die Reaktionsmischung mittels der Sprüheinrichtung zu Tropfen versprüht werden, die einen mittleren Durchmesser d50 von 0,01 bis 3 mm aufweisen, insbesondere von 0,01 bis 0,3 mm

Nach einer neunten Ausführungsform betrifft die Erfindung ein Verfahren nach einer der vorstehenden Ausführungsformen, dadurch gekennzeichnet, dass die Mischeinrichtung und/ oder die Sprüheinrichtung temperiert werden.

Nach einer zehnten Ausführungsform betrifft die Erfindung ein Verfahren nach einer der vorstehenden Ausführungsformen, dadurch gekennzeichnet, dass durch die Fließrate des Trägergases und/ oder der Reaktionsmischung und/ oder die Eintrittstemperatur des Trägergases und/ oder der Reaktionsmischung die Temperatur in der Reaktionszone des Sprühreaktors derart eingestellt wird, dass die Tröpfchen der versprühten Reaktionsmischung nach Durchschreiten der Reaktionszone und bis zum Erreichen der Kühlzone einen Reaktionsumsatz von wenigstens 95%, insbesondere wenigstens 98% aufweisen, wobei der Reaktionsumsatz insbesondere über die Bestimmung des Verhältnisses der Urethangruppen zu unreagierten OH-Gruppen am Austritt der Reaktionszone ermittelt wird, vorzugsweise mittels 1H-NMR-Messung nach DIN EN ISO/IEC 17025.

Nach einer elften Ausführungsform betrifft die Erfindung ein Verfahren nach einer der vorstehenden Ausführungsformen, dadurch gekennzeichnet, dass die Reaktionsmischungszuleitung mit einer Heizeinrichtung ausgestattet ist und die Temperatur der Reaktionsmischung auf 100 - 250°C eingestellt wird, vorzugsweise auf 150-200°C.

Nach einer zwölften Ausführungsform betrifft die Erfindung ein Verfahren nach einer der vorstehenden Ausführungsformen, dadurch gekennzeichnet, dass Trägergas eine Temperatur von 150 bis 300°C aufweist.

Nach einer dreizehnten Ausführungsform betrifft die Erfindung ein Verfahren nach einer der vorstehenden Ausführungsformen, dadurch gekennzeichnet, dass die mittlere Verweilzeit der Tröpfchen im Sprühreaktor vom Verlassen der Sprüheinrichtung bis zum Erstarren der Tröpfchen zu Partikeln 10 bis 300 s beträgt, vorzugsweise 10 bis 120 s.

Nach einer vierzehnten Ausführungsform betrifft die Erfindung ein Verfahren nach einer der vorstehenden Ausführungsformen, dadurch gekennzeichnet, dass die Monomere des thermoplastischen Polymers bei Erreichen der Produktaustragsleitung nahezu quantitativ umgesetzt sind, vorzugsweise zu wenigstens 95 Gew.-%.

Nach einer fünfzehnten Ausführungsform betrifft die Erfindung ein Verfahren nach einer der vorstehenden Ausführungsformen, dadurch gekennzeichnet, dass zur Vermeidung von Ablagerungen an der Innenwand des Sprühreaktors eine Abreinigungseinrichtung eingesetzt wird, insbesondere eine Abreinigungseinrichtung mit Flüssigkeitsfilm.

Nach einer sechzehnten Ausführungsform betrifft die Erfindung ein Verfahren nach einer der vorstehenden Ausführungsformen, dadurch gekennzeichnet, dass über die Kühlfluideintragungseinrichtung ein Kühlgasstrom eingetragen wird, insbesondere im Gleichstrom mit der Fallrichtung der Tröpfchen der Reaktionsmischung.

Nach einer siebzehnten Ausführungsform betrifft die Erfindung ein Verfahren nach einer der vorstehenden Ausführungsformen, dadurch gekennzeichnet, dass über die Kühlfluideintragungseinrichtung eine Quenchflüssigkeit eingesprüht wird, insbesondere im Gleichstrom mit der Fallrichtung der Tröpfchen der Reaktionsmischung, wobei die Quenchflüssigkeit vorzugsweise Wasser ist.

Nach einer achtzehnten Ausführungsform betrifft die Erfindung ein Verfahren nach einer der vorstehenden Ausführungsformen, dadurch gekennzeichnet, dass über die Kühlfluideintragungseinrichtung Wasser in den Bodenbereich des Sprühreaktors eingebracht wird, welches als insbesondere gerührtes Wasserbad zum Auffangen und zum Erstarren der Tropfen des thermoplastischen Polymers dient.

Nach einer neunzehnten Ausführungsform betrifft die Erfindung ein Verfahren nach einer der vorstehenden Ausführungsformen, dadurch gekennzeichnet, dass das partikuläre thermoplastische Polymer mittels einer im Bodenbereich des Sprühreaktors oder in der Produktaustragsleitung angeordneten Abtrenneinrichtung vom Kühlfluid abgetrennt wird.

Nach einer zwanzigsten Ausführungsform betrifft die Erfindung ein Verfahren nach Ausführungsform 19, dadurch gekennzeichnet, dass das partikuläre thermoplastische Polymer nach Durchlaufen der Abtrenneinrichtung thermisch getrocknet und/oder getempert wird.

Nach einer einundzwanzigsten Ausführungsform betrifft die Erfindung ein Verfahren nach Ausführungsform 19 oder 20, dadurch gekennzeichnet, dass das abgetrennte partikuläre thermoplastische Polymer zur Homogenisierung des Polymerisationsgrades in einer Temperiereinrichtung nachgetempert wird.

Nach einer zweiundzwanzigsten Ausführungsform betrifft die Erfindung ein Verfahren nach Ausführungsform 19 bis 21, dadurch gekennzeichnet, dass das in der Abtrenneinrichtung abgetrennte Kühlfluid über eine von der Abtrenneinrichtung abgehende Kühlfluid-Rückführungsleitung der Kühlfluideintragungseinrichtung wieder zugeführt wird, wobei das abgetrennte Kühlfluid vorzugsweise mittels eines in der Kühlfluideintragungseinrichtung vorgesehenen Wärmetauschers auf die gewünschte Temperatur abgekühlt wird.

Nach einer dreiundzwanzigsten Ausführungsform betrifft die Erfindung ein Verfahren nach einer der vorstehenden Ausführungsformen, dadurch gekennzeichnet, dass das über die Trägergasabführung aus dem Sprühreaktor ausgetragene Trägergas mittels einer Fördereinrichtung zum der Trägergaszuführung zugeordneten Wärmetauscher zurückgeführt und von dort dem Prozess über die Trägergaszuführung wieder zugeführt wird, wobei das Trägergas während der Rückführung vorzugsweise gereinigt und/ oder getrocknet wird.

Nach einer vierundzwanzigsten Ausführungsform betrifft die Erfindung ein partikuläres thermoplastisches Polymer, hergestellt oder herstellbar nach einem Verfahren gemäß einem der Ausführungsformen 1 bis 23.

Nach einer fünfundzwanzigsten Ausführungsform betrifft die Erfindung einen Sprühreaktor zur kontinuierlichen Herstellung partikulärer thermoplastischer Polymere durch Umsetzung wenigstens zweier miteinander polymerisierbarer Monomere, wobei dem Sprühreaktor eine Mischeinrichtung zugeordnet ist, über welche die wenigstens zwei miteinander polymerisierbaren Monomere miteinander vermischt und diese Reaktionsmischung über eine Reaktionsmischungszuleitung in den Kopf des Sprühreaktors eingetragen und dort mittels einer Sprüheinrichtung in den Reaktionsraum versprüht werden kann und in Richtung des Bodenbereichs des Sprühreaktors strömen kann, wo eine Produktaustragsleitung zum Austragen des partikulären thermoplastischen Polymers angeordnet ist, wobei der Sprühreaktor über eine im Kopfbereich vorgesehene Trägergaszuführung verfügt, mittels der ein über einen der Trägergaszuführung zugeordneten Wärmetauscher temperierbares Trägergas mit der eingesprühten Reaktionsmischung im Sprühreaktor eingetragen und oberhalb des Bodenbereichs des Sprühreaktors über eine Trägergasabführung ausgetragen werden kann, wobei der Sprühreaktor dadurch gekennzeichnet ist, dass der Sprühreaktor in eine Reaktionszone und eine Kühlzone unterteilt ist, von denen sich die Reaktionszone vom Kopfbereich des Sprühreaktors bis zu einer Kühlfluideintragungseinrichtung erstreckt, die oberhalb des Bodenbereichs im Sprühreaktor angeordnet und geeignet ist, das thermoplastische Polymer unterhalb seiner Erstarrungstemperatur abzukühlen.

Die Erfindung wird im Folgenden anhand der Fign. 1 bis 4 näher erläutert. Darin zeigt
- Fig. 1: den schematischen Aufbau eines erfindungsgemäßen Sprühreaktors,
- Fign. 2 bis 6: den Reaktionsumsatz, die Tropfentemperaturen und die Gastemperatur jeweils aufgetragen über die Sprühtumhöhe von vorliegend bis zu 50 m.

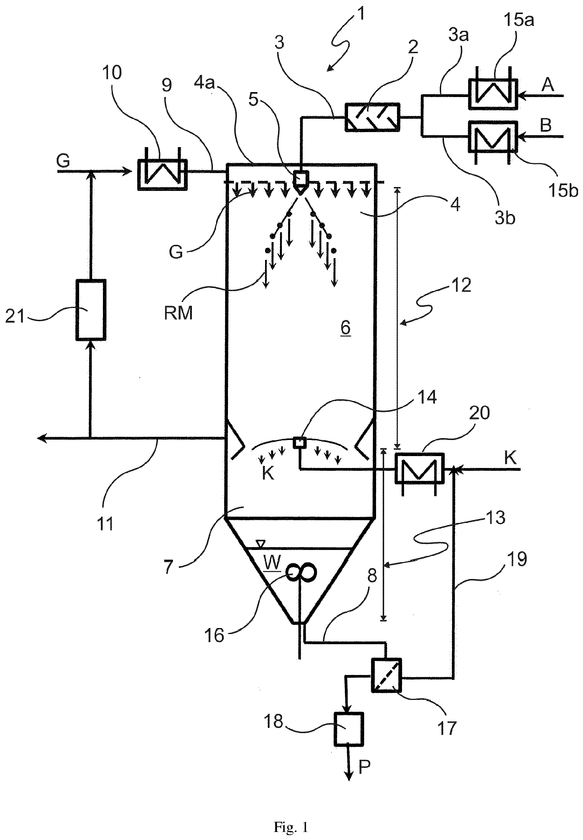

Fig. 1 zeigt den schematischen Aufbau eines erfindungsgemäßen Sprühreaktors 1 zur kontinuierlichen Herstellung partikulärer thermoplastischer Polymere P durch Umsetzung wenigstens zweier miteinander polymerisierbarer Monomere A, B. Dem Sprühreaktor 1 ist eine Mischeinrichtung 2 zugeordnet, über welche die wenigstens zwei miteinander polymerisierbaren Monomere A, B miteinander vermischt und diese Reaktionsmischung (RM) über eine Reaktionsmischungszuleitung 3, 3a, 3b in den Kopf 4a des Sprühreaktors 1 eingetragen und dort mittels einer Sprüheinrichtung 5 in den Reaktionsraum 6 und in Richtung des Bodenbereichs 7 des Sprühreaktors 1 versprüht werden können. Die Reaktionsmischungszuleitung 3, 3a, 3b ist mit einer Heizeinrichtung 15a, 15b ausgestattet, mit der die Temperatur der Monomere A, B auf das gewünschte Maß eingestellt werden kann.

Im Bodenbereich 7 ist eine Produktaustragsleitung 8 zum Austragen des partikulären thermoplastischen Polymers P angeordnet ist, wobei der Sprühreaktor 1 über eine im Kopfbereich 4 vorgesehene Trägergaszuführung 9 verfügt, mittels der ein über einen der Trägergaszuführung 9 zugeordneten Wärmetauscher 10 temperierbares Trägergas G mit der eingesprühten Reaktionsmischung RM im Sprühreaktor 1 eingetragen und oberhalb des Bodenbereichs 7 des Sprühreaktors 1 über eine Trägergasabführung 11 ausgetragen werden kann. Von dort aus kann das Trägergas ganz oder teilweise zur Trägergaszuführung 9 geleitet werden und dabei mittels einer Reinigungseinrichtung 21 aufgereinigt werden.

Der Sprühreaktor 1 ist in eine Reaktionszone 12 und eine Kühlzone 13 unterteilt, von denen sich die Reaktionszone 12 vom Kopfbereich 4 des Sprühreaktors 1 bis zu einer Kühlfluideintragungseinrichtung 14 erstreckt, die oberhalb des Bodenbereichs 7 im Sprühreaktor 1 angeordnet und geeignet ist, das thermoplastische Polymer P unterhalb seiner Erstarrungstemperatur abzukühlen. Über die Kühlfluideintragungseinrichtung 14 kann Wasser in den Bodenbereich 7 des Sprühreaktors 1 eingebracht werden, welches als mittels eines Rühraggregats 16 als gerührtes Wasserbad W zum Auffangen und zum Erstarren der Tropfen des thermoplastischen Polymers dient.

In der Produktaustragsleitung 8 ist eine Abtrenneinrichtung 17 angeordnet, mit welcher das partikuläre thermoplastische Polymer P vom Kühlfluid K abgetrennt werden kann. Nach Durchlaufen der Abtrenneinrichtung 17 kann das partikuläre thermoplastische Polymer P mittels einer Trocknungseinrichtung 18 thermisch getrocknet und/oder getempert werden. Das in der Abtrenneinrichtung 17 abgetrennte Kühlfluid K kann über eine von der Abtrenneinrichtung 17 abgehende Kühlfluid-Rückführungsleitung 19 der Kühlfluideintragungseinrichtung 14 wieder zugeführt werden. Dabei kann das abgetrennte Kühlfluid K mittels eines in der Kühlfluideintragungseinrichtung 14 vorgesehenen Wärmetauschers 20 auf die gewünschte Temperatur abgekühlt werden.

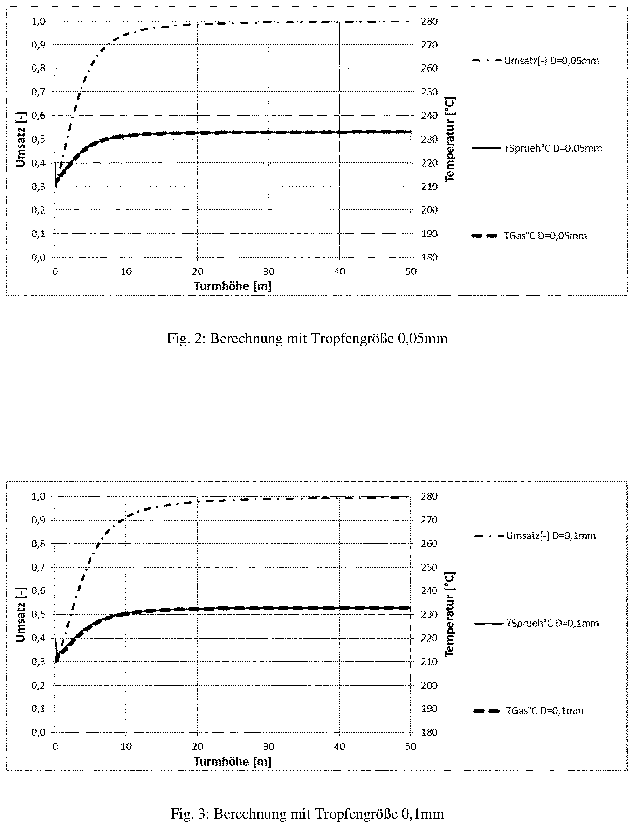

In Fign. 2 bis 6 sind berechnete Reaktionsverläufe und Temperaturen in einem Sprühreaktor aufgetragen. Den Berechnungen liegen folgende Annahmen zugrunde:
- Die Monomer- und Oligomeranteile in den Sprühtropfen sind homogen verteilt
- Die Tropfengeschwindigkeit wird aus dem Tropfengewicht und dem Reibwiderstandsgesetz nach Kaskas (siehe http://www.unimagdeburg.de/isut/LSS/Lehre/Arbeitsheft/VII.pdf) berechnet
- Die Gasströmung wird als homogen angenommen (konst. Gasgeschwindigkeit)
- Der Wärmeübergang zwischen Gas und Tropfen wird mit dem vielfach zitierten Wärmeübergangsgesetz für die umströmten Kugel nach Whitaker berechnet (Whitaker, S.: 1976, Fundamental Principles of Heat Transfer, Pergamom Press Inc., New York)
- Die Kinetik der Polyaddition wird nach Arlas et al modelliert (B. Fernandez d'Arlas, L. Rueda, P.M. Stefani, K. de la Caba, I. Mondragona, A. Eceiza; Thermochimica Acta 459 (2007) 94-103)
- Die Reaktionsumsätze und Temperaturverläufe werden entlang der Tropfenbahnen mit geeigneten Zeit- bzw- Ortsschrittweiten berechnet, wobei in den verschiedenen Rechnungen jeweils von Tropfen gleicher Größe ausgegangen wird, so dass die betrachteten Tropfen lokal gleiche Geschwindigkeit und damit gleiche Verweilzeiten, Temperaturen und Umsätze aufweisen

Fign. 2 bis 6 zeigen die berechneten Reaktionsumsätze und Temperaturverläufe einer Polyadditionsreaktion mit einer spez. Energiefreisetzung von 690kJ/kg Monomermischung in einem Sprühreaktor. Die Monomermischung wird vor Eintritt in den Sprühreaktor auf 220°C erhitzt. Dabei wird ein Teil der Monomere bereits reagieren. Der Umsatz vor Eintritt in den Sprühreaktor wurde mit 30% abgeschätzt, was einer adiabaten Temperaturerhöhung von ca. 100°C entspricht. Dadurch wird ein Teil der erforderlichen Wärmemenge zur Erhitzung der Polymere durch die Reaktionswärme aufgebracht. Die teilreagierte Monomermischung wird oben im Reaktor eingesprüht mit abwärts gerichteter Verdüsungsrichtung. Die Düsenaustrittsgeschwindigkeit wurde mit 30m/s angenommen. Da die Tropfen recht rasch ihre stationäre Endgeschwindigkeit erreichen, ist der zu erwartende Einfluss der Anfangsgeschwindigkeit nicht sehr groß.

Das in den Sprühreaktor eintretende Gas (Luft) hat eine Temperatur von 211°C und erwärmt sich auf ca. 230°C. Der Massenstrom des Gases beträgt 20x dem der Monomermischung. Die Gasgeschwindigkeit wurde mit 0,5m/s angesetzt.

In Fig. 2 sind die Verläufe des Reaktionsumsatzes sowie der Tropfen- und Gastemperatur entlang der Sprühturmhöhe aufgetragen für Tropfengrößen von 0,05mm. Nach 30m wird ein Umsatz 99,3% erreicht und nach 50m 99,8%. Der Wärmeübergang zwischen Gas und Tropfen ist so groß, dass die Tropfentemperatur TSprueh nahezu im gesamten Reaktorbereich gleich der Gastemperatur ist. Die Abführung der Reaktionswärme ins Gas ist somit nahezu ideal.

In Fig. 3 sind die Verläufe des Reaktionsumsatzes sowie der Tropfen- und Gastemperatur entlang der Sprühturmhöhe aufgetragen für Tropfengrößen von 0,1mm. Nach 30m wird ein Umsatz 99,0% erreicht und nach 50m 99,6%. Der Wärmeübergang zwischen Gas und Tropfen ist so groß, dass die Tropfentemperatur TSprueh nahezu im gesamten Reaktorbereich gleich der Gastemperatur ist. Die Abführung der Reaktionswärme ins Gas ist somit nahezu ideal.

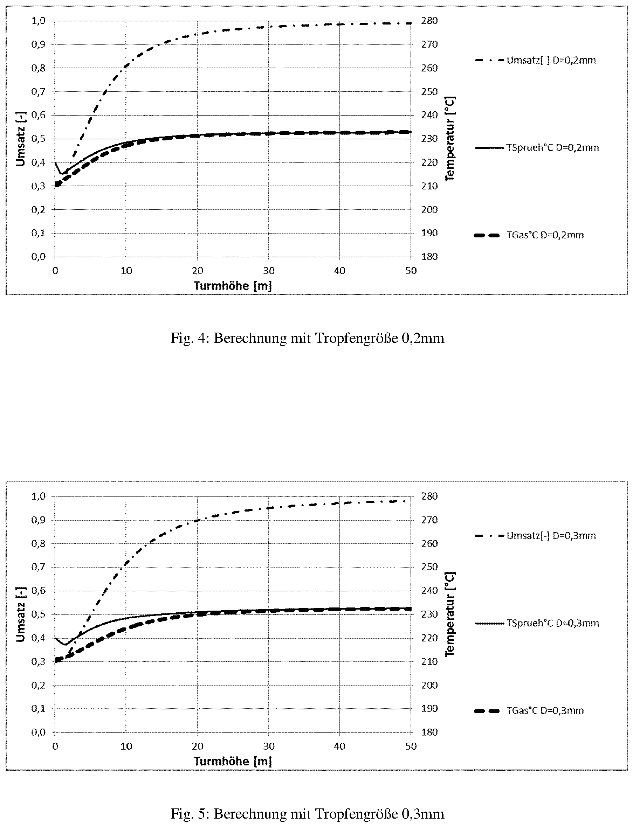

In Fig. 4 sind die Verläufe des Reaktionsumsatzes sowie der Tropfen- und Gastemperatur entlang der Sprühturmhöhe aufgetragen für Tropfengrößen von 0,2mm. Nach 30m wird ein Umsatz 97,4% erreicht und nach 50m 99,0%. Der Wärmeübergang zwischen Gas und Tropfen ist so groß, dass die Tropfentemperatur TSprueh nur geringfügig über der Gastemperatur liegt. Die Abführung der Reaktionswärme ins Gas gelingt ohne dass die Polymermischung höhere Temperaturen erreicht.

In Fig. 5 sind die Verläufe des Reaktionsumsatzes sowie der Tropfen- und Gastemperatur entlang der Sprühturmhöhe aufgetragen für Tropfengrößen von 0,3mm. Nach 30m wird ein Umsatz 95,1% erreicht und nach 50m 98,1%. Der Wärmeübergang zwischen Gas und Tropfen ist so groß, dass die Tropfentemperatur TSprueh nur geringfügig über der Gastemperatur liegt. Die Abführung der Reaktionswärme ins Gas gelingt ohne dass die Polymermischung höhere Temperaturen erreicht.

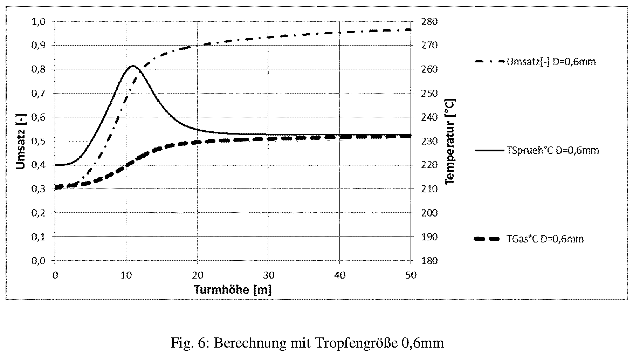

In Fig. 6 sind die Verläufe des Reaktionsumsatzes sowie der Tropfen- und Gastemperatur entlang der Sprühturmhöhe aufgetragen für Tropfengrößen von 0,6mm. Nach 30m wird ein Umsatz 93,4% erreicht und nach 50m 96,5%. Der Wärmeübergang zwischen Gas und Tropfen ist im oberen Bereich der Reaktionszone bis 20m Turmhöhe, gemessen von oben nach unten, deutlich schlechter. Durch die Abführung der Reaktionswärme durchläuft die Tropfentemperatur ein Maximum von über 260°C, was ggf. zu einer Produktschädigung und Zersetzung führen kann. Da die Verweilzeit der großen Tropfen bis 30m Turmhöhe nur etwa 8sec beträgt, ist jedoch je nach Kinetik der Zersetzungsreaktion die Schädigung noch nicht sehr groß. Bei Tropfen oberhalb 0,6mm können die Tropfentemperaturen bei den hier gewählten Prozessparametern aber noch sehr viel höhere Temperaturen erreichen, so dass eine signifikante Produktschädigung zu erwarten ist.

Alle betrachteten Berechnungsfälle sind in der folgenden Tabelle 1 aufgelistet:

**Tabelle 1: Übersicht über ausgeführte Berechnungsfälle: Tropfengröße dTropf, Turmhöhe, Verweilzeit der Tropfen Tverweil, Umsatz, maximale Sprühtropfentemperatur im Reaktor Ttropf max**

| Case | dT ropf | Turmhöhe | Tverweil | Umsatz | Ttropf max |
|---|---|---|---|---|---|
| | mm | m | sec | % | °C |
| 1 | 0,05 | 30 | 54,3 | 99,34 | 232,9 |
| | | 50 | 90,6 | 99,75 | 233,0 |
| 2 | 0,1 | 30 | 43,2 | 98,98 | 232,8 |
| | | 50 | 72,2 | 99,62 | 233,0 |
| 3 | 0,2 | 30 | 26,0 | 97,42 | 232,4 |
| | | 50 | 43,8 | 99,04 | 232,8 |
| 4 | 0,3 | 30 | 17,4 | 95,07 | 231,9 |
| | | 50 | 29,5 | 98,11 | 232,6 |
| 5 | 0,6 | 30 | 8,6 | 93,41 | 261,3 |
| | | 50 | 14,8 | 96,52 | 261,3 |

Es ist ersichtlich, dass die größeren Tropfen nur kurze Verweilzeiten aufweisen, so dass die Umsätze abfallen. Dem kann entgegengesteuert werden durch Verlängerung des Sprühturmes, aber auch durch die Springbrunnenfahrweise, bei der die Tropfen von unten nach oben eingesprüht werden und dadurch zumindest ein Teil der Sprühturmhöhe zweimal durchlaufen wird und die Verweilzeit ohne drastische Turmverlängerung erhöht werden kann. Die Düsenposition ist hier so anzupassen, dass die Tropfen bis nahezu zur Sprühtumoberseite aufsteigen. Hierzu sind die Düsen bei der Springbrunnenfahrweise im Gegensatz zu der in Fig. 1 dargestellten Anordnung nicht vertikal nach unten sondern im Wesentlichen vertikal nach oben gerichtet. Dabei ist zu beachten, dass i.d.R. aufgrund des höheren Anfangsimpulses die großen Tropfen weiter aufsteigen können. In üblichen Springbrunnentürmen wird zudem die Wurfhöhe durch einen Eintrittsdrall des Gases eingestellt. Diese Verfahren sind in der Sprühtrocknung hinlänglich bekannt.

### Bezugszeichenliste:

- 1: Sprühreaktor
- 2: Mischeinrichtung
- 3: Reaktionsmischungszuleitung
- 3a: Reaktionsmischungszuleitung
- 3b: Reaktionsmischungszuleitung
- 4: Kopfbereich
- 4a: Kopf
- 5: Sprüheinrichtung
- 6: Reaktionsraum
- 7: Bodenbereich
- 8: Produktaustragsleitung
- 9: Trägergaszuführung
- 10: Wärmetauscher
- 11: Trägergasabführung
- 12: Reaktionszone
- 13: Kühlzone
- 14: Kühlfluideintragungseinrichtung
- 15a: Heizeinrichtung
- 15b: Heizeinrichtung
- 16: Rühraggregat
- 17: Abtrenneinrichtung
- 18: Trocknungseinrichtung
- 19: Kühlfluid-Rückführungsleitung
- 20: Wärmetauscher
- 21: Reinigungseinrichtung

- A: Monomer
- B: Monomer
- G: Temperiertes Trägergas
- P: partikuläres thermoplastisches Polymer
- RM: Reaktionsmischung
- K: Kühlgasstrom
- W: Wasserbad

## Patentansprüche

1. Verfahren zur kontinuierlichen Herstellung partikulärer thermoplastischer Polymere (P) durch Umsetzung wenigstens zweier miteinander polymerisierbarer Monomere (A, B) in einem Sprühreaktor (1), wobei die wenigstens zwei miteinander polymerisierbareren Monomere (A, B) über eine dem Sprühreaktor (1) zugeordnete Mischeinrichtung (2) miteinander vermischt und diese Reaktionsmischung (RM) über eine Reaktionsmischungszuleitung (3, 3a, 3b) kontinuierlich in den Kopf (4a) des Sprühreaktors (1) eingetragen und dort mittels einer Sprüheinrichtung (5) in den Reaktionsraum (6) versprüht wird und in Richtung des Bodenbereichs (7) des Sprühreaktors (1) strömt, wo das partikuläre thermoplastische Polymer (P) über eine Produktaustragsleitung (8) abgeführt wird, wobei über eine im Kopfbereich (4) des Sprühreaktors (1) vorgesehene Trägergaszuführung (9) ein über einen der Trägergaszuführung (9) zugeordneten Wärmetauscher (10) temperiertes Trägergas (G) in den Sprühreaktor (1) eingetragen und oberhalb des Bodenbereichs (7) des Sprühreaktors (1) über eine Trägergasabführung (11) ausgetragen wird,
**dadurch gekennzeichnet, dass**
die wenigstens zwei miteinander polymerisierbareren Monomere (A, B) in einer sich vom Kopfbereich (4) des Sprühreaktors (1) bis zu einer oberhalb des Bodenbereichs (7) angeordneten Kühlfluideintragungseinrichtung (14) erstreckenden Reaktionszone (12) zu dem thermoplastischem Polymer umgesetzt und oberhalb dessen Schmelzpunkt gehalten und anschließend in einer sich von der Kühlfluideintragungseinrichtung (14) bis zum Bodenbereich (7) des Sprühreaktors (1) erstreckenden Kühlzone (13) unterhalb dessen Erstarrungstemperatur abgekühlt wird, wodurch das partikuläre thermoplastische Polymer (P) erhalten wird.

2. Verfahren nach Anspruch 1, **dadurch gekennzeichnet, dass** das thermoplastische Polymer (P) ein hydroxy-terminierte Polymer ist und das erste Monomer A zumindest ein Polyisocyanat und das zweite Monomer B zumindest ein cycloaliphatisches, aliphatisches oder araliphatisches Polyol oder eine Mischung von diesen mit einer Hydroxylzahl von ≥ 1000 mg KOH/g bestimmt gemäß DIN EN ISO 4629-2:2016 umfasst und das erste Monomer A und/ oder das zweite Monomer B optional zumindest einen Katalysator und / oder Zusatzstoff enthält, wobei die Komponenten A und B in einem molaren Verhältnis von 0,9 : 1,0 bis 0,999 :1,000 eingesetzt werden.

3. Verfahren nach Anspruch 2, **dadurch gekennzeichnet, dass** das hydroxy-terminierte Polymer eine OH-Funktionalität im Bereich von 1,8 bis 2,2, vorzugsweise von 1,9 bis 2,1, besonders bevorzugt von 1,95 bis 2,05 aufweist.

4. Verfahren nach Anspruch 2 oder 3, **dadurch gekennzeichnet, dass** das Polyisocyanat der Komponente A zumindest ein cycloaliphatisches, aliphatisches, aromatisches und/oder ein araliphatisches Diisocyanat umfasst oder daraus besteht, insbesondere zumindest ein cycloaliphatisches, aliphatisches und/oder araliphatisches Diisocyanat, bevorzugt zumindest ein aliphatisches oder cycloaliphatisches Diisocyanat, vorzugsweise ausgewählt aus der Gruppe bestehend aus 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI) und/oder Mischungen von diesen.

5. Verfahren nach einem der vorstehenden Ansprüche, **dadurch gekennzeichnet, dass** die Mischeinrichtung (2) und/ oder die Sprüheinrichtung (5) temperiert werden.

6. Verfahren nach einem der vorstehenden Ansprüche, **dadurch gekennzeichnet, dass** die Reaktionsmischungszuleitung (3, 3a, 3b) mit einer Heizeinrichtung (15a, 15b) ausgestattet ist und die Temperatur der Reaktionsmischung (RM) auf 100 - 250°C eingestellt wird, vorzugsweise auf 150-200°C.

7. Verfahren nach einem der vorstehenden Ansprüche, **dadurch gekennzeichnet, dass** Trägergas (G) eine Temperatur von 150 bis 300°C aufweist.

8. Verfahren nach einem der vorstehenden Ansprüche, **dadurch gekennzeichnet, dass** die mittlere Verweilzeit der Tröpfchen im Sprühreaktor (1) vom Verlassen der Sprüheinrichtung (5) bis zum Erstarren der Tröpfchen zu Partikeln 10 bis 300 s beträgt, vorzugsweise 10 bis 120s.

9. Verfahren nach einem der vorstehenden Ansprüche, **dadurch gekennzeichnet, dass** über die Kühlfluideintragungseinrichtung (14) ein Kühlgasstrom (K) eingetragen wird, insbesondere im Gleichstrom mit der Fallrichtung der Tröpfchen der Reaktionsmischung (RM).

10. Verfahren nach einem der vorstehenden Ansprüche, **dadurch gekennzeichnet, dass** über die Kühlfluideintragungseinrichtung (14) eine Quenchflüssigkeit eingesprüht wird, insbesondere im Gleichstrom mit der Fallrichtung der Tröpfchen der Reaktionsmischung (RM), wobei die Quenchflüssigkeit vorzugsweise Wasser ist.

11. Verfahren nach einem der vorstehenden Ansprüche, **dadurch gekennzeichnet, dass** über die Kühlfluideintragungseinrichtung (14) Wasser in den Bodenbereich (7) des Sprühreaktors (1) eingebracht wird, welches als insbesondere gerührtes Wasserbad (W) zum Auffangen und zum Erstarren der Tropfen des thermoplastischen Polymers dient.

12. Verfahren nach einem der vorstehenden Ansprüche, **dadurch gekennzeichnet, dass** das partikuläre thermoplastische Polymer (P) mittels einer im Bodenbereich (7) des Sprühreaktors (1) oder in der Produktaustragsleitung (8) angeordneten Abtrenneinrichtung (17) vom Kühlfluid (K) abgetrennt wird, wobei das partikuläre thermoplastische Polymer (P) bevorzugt nach Durchlaufen der Abtrenneinrichtung (17) thermisch getrocknet und/oder getempert wird.

13. Verfahren nach Anspruch 12, **dadurch gekennzeichnet, dass** das in der Abtrenneinrichtung (17) abgetrennte Kühlfluid (K) über eine von der Abtrenneinrichtung (17) abgehende Kühlfluid-Rückführungsleitung (19) der Kühlfluideintragungseinrichtung (14) wieder zugeführt wird, wobei das abgetrennte Kühlfluid (K) vorzugsweise mittels eines in der Kühlfluideintragungseinrichtung (14) vorgesehenen Wärmetauschers (20) auf die gewünschte Temperatur abgekühlt wird.

14. Partikuläres thermoplastisches Polymer (P), hergestellt oder herstellbar nach einem Verfahren gemäß einem der Ansprüche 1 bis 13.

15. Sprühreaktor (1) zur kontinuierlichen Herstellung partikulärer thermoplastischer Polymere (P) durch Umsetzung wenigstens zweier miteinander polymerisierbarer Monomere (A, B), wobei dem Sprühreaktor (1) eine Mischeinrichtung (2) zugeordnet ist, über welche die wenigstens zwei miteinander polymerisierbaren Monomere (A, B) miteinander vermischt und diese Reaktionsmischung (RM) über eine Reaktionsmischungszuleitung (3, 3a, 3b) in den Kopf (4a) des Sprühreaktors (1) eingetragen und dort mittels einer Sprüheinrichtung (5) in den Reaktionsraum (6) und in Richtung des Bodenbereichs (7) des Sprühreaktors (1) versprüht werden können, wo eine Produktaustragsleitung (8) zum Austragen des partikulären thermoplastischen Polymers (P) angeordnet ist, wobei der Sprühreaktor (1) über eine im Kopfbereich (4) vorgesehene Trägergaszuführung (9) verfügt, mittels der ein über einen der Trägergaszuführung (9) zugeordneten Wärmetauscher (10) temperierbares Trägergas (G) mit der eingesprühten Reaktionsmischung (RM) im Sprühreaktor (1) eingetragen und oberhalb des Bodenbereichs (7) des Sprühreaktors (1) über eine Trägergasabführung (11) ausgetragen werden kann,
**dadurch gekennzeichnet, dass**
der Sprühreaktor (1) in eine Reaktionszone (12) und eine Kühlzone (13) unterteilt ist, von denen sich die Reaktionszone (12) vom Kopfbereich (4) des Sprühreaktors (1) bis zu einer Kühlfluideintragungseinrichtung (14) erstreckt, die oberhalb des Bodenbereichs (7) im Sprühreaktor (1) angeordnet und geeignet ist, das thermoplastische Polymer (P) unterhalb seiner Erstarrungstemperatur abzukühlen.
